# EUROPÄISCHE PATENTANMELDUNG

(11) **EP 1 076 478 A2**
(43) Veröffentlichungstag der Anmeldung: **14.02.2001**
(21) Anmeldenummer: 00202736.5
(22) Anmeldetag: 31.07.2000
(51) Int. Cl.: H05B 41/292, H05B 37/03

(54) **Verfahren und Anordnung zur Ueberwachung einer Gasentladungslampe**

(30) Priorität: 07.08.1999 DE 19937422
(71) Anmelder: Philips Corporate Intellectual Property GmbH, 52064 Aachen (DE); Koninklijke Philips Electronics N.V., 5621 BA Eindhoven (NL)
(72) Erfinder: Klinkenberg, Klaus, 52064 Aachen (DE)
(74) Vertreter: Volmer, Georg, Dipl.-Ing.

(57) **Zusammenfassung**

Die Erfindung betrifft ein Verfahren zur Überwachung einer Gasentladungslampe, bei dem ein der Lampenspannung zugeordneter elektrischer Messwert erfasst wird, sowie eine Anordnung zur Überwachung einer Gasentladungslampe mit einer Kontrollschaltung zur Erfassung eines der Lampenspannung zugeordneten elektrischen Messwertes. Um bessere Möglichkeiten zur Vorhersage der Lebensdauer der Lampen und der Gefahr durch Explosionen zu realisieren, wird vorgeschlagen, bei der Erfassung eines einem deutlichen Absinken der Lampenspannung entsprechenden Messwertes ein Warnsignal zu erzeugen. Der elektrische Messwert kann sowohl proportional (z.B. eine außerhalb der Lampe einfach messbare Spannung, die vorzugsweise direkt proportional zur Lampenspannung ist) als auch umgekehrt proportional (z.B. der der Lampe zugeführte Strom) zur Lampenspannung (Brennspannung) sein.

## Beschreibung

Die Erfindung betrifft ein Verfahren zur Überwachung einer Gasentladungslampe, bei dem ein der Lampenspannung zugeordneter elektrischer Messwert erfasst wird, sowie eine Anordnung zur Überwachung einer Gasentladungslampe mit einer Kontrollschaltung zur Erfassung eines der Lampenspannung zugeordneten elektrischen Messwertes.

Das Ende der Lebensdauer von Hochdruckgasentladungslampen mit Lampeninnendrücken von mehr als 200 bar (z. B. UHP) ist häufig gekennzeichnet durch eine Explosion des Lampenkolbens. Solche UHP-Lampen bestehen im wesentlichen aus einem annähernd runden Quarzkolben, in den seitlich Wolframelektroden mit einem Abstand von 1.0 bis 1.3 mm eingeschmolzen sind.. Zwischen diesen Elektroden baut sich eine Gasentladung auf, die verbunden mit einer aufwärtsgerichteten Konvektionsströmung die Kolbenoberseite auf Temperaturen in die Nähe des Schmelzpunktes der aus Quarz bestehenden Kolbenwand bringen kann. Während der Lebensdauer der Lampen vergrößert sich der Elektrodenabstand durch Abtransport von Wolfram zu den Elekttodenenden. Da die Lampen auf eine konstante Leistung geregelt werden, erhöht sich die Spannung in der Lampe (Brennspannung). Bei einer Explosion werden die die Lampe umgebenden Gehäuseteile mit Glassplittern und den im Inneren der Lampe befindlichen Materialien (z.B. Quecksilber und andere Füllgase) kontaminiert. Deshalb werden bekannte Lampe vorrugsweise in einen geschlossenen Reflektor eingebaut.

Bei kleinen Reflektorsystemen mit Lampen hoher Leistung ist der Einbau innerhalb eines geschlossenen Reflektors aus thermischen Aspekten äußerst schwierig. Die Verwendung einer durchbohrten Frontscheibe mit dem freien Lampenende außerhalb des Reflektors zur Verminderung der thermischen Probleme hat den Nachteil, dass mögliche Explosionsrückstände aus dem Reflektor austreten und innerhalb des Gehäuses (z.B. Projektor) Schaden anrichten können.

Aus der deutschen Offenlegungsschrift DE 197 15 254 ist bekannt, ein Vorschaltgerät für den Betrieb von Gasentladungslampen zur Lebensdauerüberwachung der Lampen zu verwenden. Zur Erfassung des Lampenverschleißes und um einen rechtzeitigen Lampenwechsel bei Hochdruckgasentladungslampen zu ermöglichen, ist das Vorschaltgerät mit einer Überwachungsschaltung versehen, die ein längerfristiges Erhöhen der Brennspannung der Lampe über einen Grenzwert hinaus erfasst und ggf. das Vorschaltgerät abschaltet. Das Vorschaltgerät besitzt in bekannter Weise die zum Betrieb einer Gasentladungslampe notwendigen Funktionen (beispielsweise Bereitstellung der Betriebsleistung und eine Zündeinrichtung). Zusätzlich enthält das Vorschaltgerät noch eine Überwachungseinrichtung (Kontrollschaltung) mit einer Überwachungsschaltung für die Brennspannung und einer Zeitschaltung. Die Überwachungsschaltung erfasst die an der Gasentladung anliegende Spannung oder eine andere, dieser entsprechende Spannung. Überschreitet die Brennspannung einen voreinstellbaren Grenzwert, gibt die Überwachungsschaltung an ihrem Ausgang ein Signal ab. Dieses Signal dient nicht unmittelbar zum Sperren oder Inaktivieren der Speisequelle der Lampe, sondern wird mittels der Zeitschaltung noch auf den zeitlichen Verlauf überprüft. Wenn das Signal eine vorbestimmte Zeitspanne anliegt, wird die Speisequelle abgeschaltet.

Verfahren und Anordnungen zur Überwachung von Gasentladungslampen nach dem Stand der Technik überwachen die Brennspannung der Lampen nur hinsichtlich eines Anstieges bis ein Grenzwert erreicht wird. Solche Verfahren sind hilfreich für die Lampen, deren Brennspannung aufgrund zurückgehender Elektroden über die Lebensdauer ansteigt. Das Überschreiten eines Grenzwertes kann als Abschaltsignal verwendet werden, um eine Zerstörung der Lampe zu verhindern. Oft erreichen Gasentladungslampen die durch eine Maximalspannung gekennzeichnete Maximallebensdauer nicht, weil die Lampe vorher durch andere Ursachen zerstört wird. So entstehen insbesondere bei nicht optimaler Fül-lung der Lampe vor dem Erreichen der Maximalspannung Abschwärzungen an der Innenseite des Entladungsgefäßes (Lampenkolben). Dies führt zu einer Volumenvergrößerung des Lampenkolbens (fortwährendes Aufblasen) und damit zu einer Druckabnahme. Da trotz weiterer Vergrößerung des Elektrodenabstandes die Brennspannung aufgrund der Druckabnahme nicht weiter steigt, kann die Gefahr der Explosion der Lampe von bekannten Überwachungseinrichtungen nicht detektiert werden.

Die Aufgabe der Erfindung ist es daher, eine bessere Überwachung von Gasentladungslampen zu ermöglichen. Dabei sollen insbesondere bessere Möglichkeiten zur Vorhersage der Lebensdauer der Lampen und der Gefahr durch Explosionen realisiert werden.

Die Aufgabe der Erfindung wird dadurch gelöst, dass bei der Erfassung eines einem deutlichen Absinken der Lampenspannung entsprechenden Messwertes ein Warnsignal erzeugt wird. Der elektrische Messwert kann sowohl proportional (z.B. eine außerhalb der Lampe einfach messbare Spannung, die vorzugsweise direkt proportional zur Lampenspannung ist) als auch umgekehrt proportional (z.B. der der Lampe zugeführte Strom) zur Lampenspannung (Brennspannung) sein. Mittels des vorgeschlagenen Verfahrens wird damit im Gegensatz zu bekannten Verfahren kein Ansteigen oder zeitlich vorwiegend konstanter Verlauf, sondern ein zeitlicher Verlauf der Lampenspannung mit negativer Steigung detektiert. Das deutliche Absinken kann insbesondere anhand einer kennzeichnenden negativen Steigung der Lampenspannung detektiert werden. Als zusätzliches Merkmal für den zeitlichen Verlauf der Lampenspannung kann beispielsweise das Auftreten einer negativen Steigung über einen bestimmten Zeitraum, ein bestimmter, einstellbarer absoluter Wert oder eine Kombination aus beiden herangezogen werden.

In einer Ausgestaltung der Erfindung ist vorgesehen, dass der Messwert mit einem Referenzwert verglichen wird, dass jeweils zu einem Messwert ein der Abweichung des Messwertes vom Referenzwert entsprechender Differenzwert gebildet wird, und dass bei Erfassen eines einem einstellbaren maximalen Differenzwert zugeordneten Messwertes ein Warnsignal erzeugt wird. Der Referenzwert ist zeitabhängig, da er vorzugsweise einem zu einem bestimmten Zeitpunkt für die jeweilige Lampe erwarteten Standardwert entspricht. Solche Standardwerte können aus Messungen an ähnlichen Lampen abgeleitet werden. Eine weitere Möglichkeit ist eine Entscheidung zur Erzeugung des Warnsignals anhand eines detektierten Minimalwertes der Lampenspannung. Dieser Minimalwert kann ebenfalls zeitabhängig und an den jeweiligen Referenzwert gekoppelt sein. Der Minimalwert entspricht einem Minimum der Lampenspannung, bei dem die Lampe aus Sicherheitsgründen abgeschaltet und ausgetauscht werden muss.

In einer bevorzugten Weiterbildung der Erfindung ist vorgesehen, dass ein in einem zum Betrieb der Gasentladungslampe geeigneten Vorschaltgerät enthaltener Mikroprozessor den Messwert empfängt, die Ermittlung des einem deutlichen Absinken der Lampenspannung entsprechenden Messwertes durchführt und das Warnsignal bei Ermittlung eines solchen Messwertes erzeugt. In bekannten zum Betrieb von Gasentladungslampen verwendeten elektronischen Vorschaltgeräten (EVG) ist meist ein Mikroprozessor enthalten, der Zündspannung, Frequenz, Pulshöhe und Leistung steuert und die Lampe bei niedriger Betriebsspannung auf halbe Leistung zurückschaltet. Dieser Mikroprozessor ist meist derart ausgestartet oder kann auf einfache Weise entsprechend erweitert werden, die zusätzliche Funktion der Überwachung der Gasentladungslampe gemäß der Erfindung durchzuführen.

Bei einer vorteilhaften Ausgestaltung des erfindungsgemäßen Verfahrens ist vorgesehen, dass der Mikroprozessor den Messwert in regelmäßigen zeitlichen Abständen empfangt, die während einer einstellbaren Einbrennphase der Gasentladungslampe empfangenen Messwerte nicht zur Ermittlung des einem deutlichen Absinken der Lampenspannung entsprechenden Messwertes heranzieht, aus jeweils 5 aufeinanderfolgenden Messwerten die Steigung des Messwertes ermittelt, und bei Ermittlung einer negativen Steigung des Messwertes das Warnsignal erzeugt. Diese Funktionen können von einen üblichen Mikroprozessor ausgeführt werden. Jeweils zu mittels des Versorgungstaktes und eines Zählers einstellbaren Zeitpunkten empfangt der Mikroprozessor einen Messwert und legt ihn in einem Speicher (z.B. ein Register) ab. In ähnlicher Weise ist auch eine Zeit für die Einbrennphase der Lampe einstellbar. Die ersten Stunden sind durch eine Einbrennphase der Lampe gekennzeichnet, in der es zu Spannungsschwankungen kommt, die nicht berücksichtigt werden sollen, so dass erst danach (z.B. 2000h) ein erster Messwert gespeichert wird. Wenn fünf Messwerte im Speicher enthalten sind, ermittelt der Mikroprozessor mittels üblicher mathematischer Prozesse die Steigung des Messwertes. Je nach erforderlicher Genauigkeit und Leistungsvermögen des verwendeten Mikroprozessors kann die Anzahl der Messwerte und der zeitliche Abstand natürlich angepasst werden. Bei Ermittlung einer negativen Steigung wird ein Ausgang des Mikroprozessors aktiv und damit das Warnsignal erzeugt.

Des weiteren wird die Aufgabe der Erfindung auch noch durch eine Anordnung gelöst, bei der die Kontrollschaltung bei der Erfassung eines einem deutlichen Absinken der Lampenspannung entsprechenden Messwertes zur Erzeugung eines Warnsignals vorgesehen ist. Die Kontrollschaltung kann beispielsweise durch einen geeignet eingestellten Mikroprozessor, eine festverdrahtete Logik oder in analoger Schaltungstechnik realisiert sein. Vorteilhafte Ausgestaltungen der erfindungsgemäßen Anordnung sind in den weiteren Ansprüchen angegeben.

Das erfindungsgemäße Verfahren und die Anordnung zur Überwachung einer Gasentladungslampe ermöglichen eine weitgehend zuverlässige Vorhersage von Explosionen und können dadurch ein rechtzeitiges Abschalten der Lampe bewirken. Dabei ist es unwichtig, ob die thermische Belastung durch innere Vorgänge in der Lampe (z.B. Rekristallisation durch Ahschwärzungen) oder auch kombiniert mit äußeren Belastungen (z.B. Ausfall der Gerätekühlung) hervorgerufen wird.

Im folgenden soll ein Ausführungsbeispiel der Erfindung anhand von Zeichnungen näher erläutert werden. Dabei zeigen
- Figur 1:: ein Blockdiagramm einer Anordnung zur Überwachung einer Gasentladungslampe,
- Figur 2:: ein Flussdiagramm mit einem Ablauf des erfindungsgemäßen Verfahrens zur Überwachung einer Gasentladungslampe und
- Figur 3:: ein Flussdiagramm mit einem weiteren Ablauf des erfindungsgemäßen Verfahrens zur Überwachung einer Gasentladungslampe.

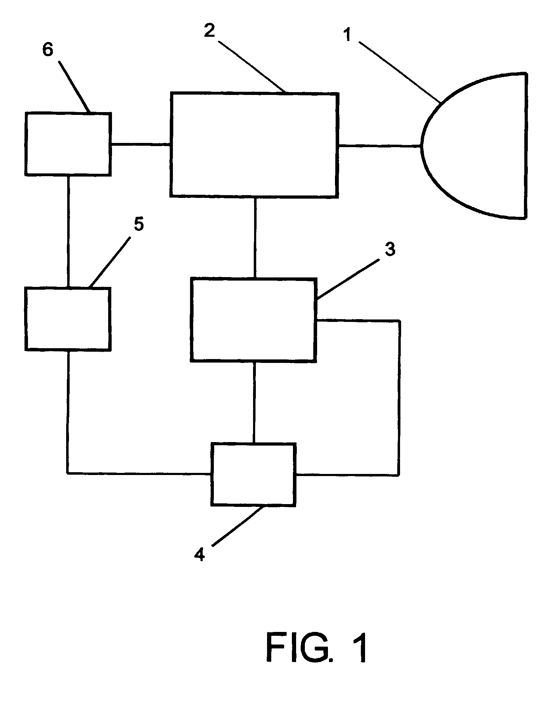

In der Figur 1 ist ein Blockdiagramm einer erfindungsgemäßen Anordnung zur Überwachung einer UHP-Gasentladungslampe 1 dargestellt. Ein elektronisches Vorschakgerät (EVG) 2 liefert in bekannter Weise alle zum Betrieb der UHP-Lampe 1 notwendigen Versorgungsspannungen. Ein Spannungsmessgerät 3 misst die der UHP-Lampe 1 zugeführte Spannung. Ein Mikroprozessor 4 empfängt die gemessenen Spannungswerte zu einstellbaren Zeitpunkten, die mittels eines Steuersignals dem Spannungsmessgerät 3 angezeigt werden. Selbstverständlich kann trotz der zur Vereinfachung gewählten Darstellung in getrennten Blöcken das Spannungsmessgerät 3 und der Mikroprozessor 4 im EVG 2 integriert bzw. eingebaut sein. An einem Ausgang des Mikroprozessors 4 ist eine Anzeigevorrichtung 5 angeschlossen, die durch eine optische Anzeige signalisiert, wann ein Lampenwechsel vorgenommen werden soll. Dazu gibt der Mikroprozessor 4 ein Anzeigesignal aus. Die Anzeige kann beispielsweise durch eine einfache, farblich gekennzeichnete LED oder durch eine LCD-Anzeige realisiert werden. Insbesondere muss die Anzeigevorrichtung 5 nicht zwangsweise in der Nähe der UHP-Lampe 1 angeordnet sein Zusätzlich oder ersatzweise kann auch eine akustische Anzeige vorgesehen werden. Die Ausgestaltung kann in Abhängigkeit der Anwendung und der Erfordernisse angepasst werden. Eine Abschaltvorrichtung 6 ist ebenfalls mit dem Ausgang des Mikroprozessors 4 verbunden. Wenn der Mikroprozessor 4 ein Abschaltsignal ausgibt, leitet die Abschaltvorrichtung 6 das Abschalten des EVG 2 und damit der Lampe 1 ein. Je nach Anwendung kann dabei ein Ausgang des Mikroprozessors 4 verwendet werden, auf dem zwei unterschiedliche Signale ausgegeben werden, die von der Anzeigevorrichtung 5 oder der Abschaltvorrichtung 6 verarbeitet werden. Eine andere Möglichkeit zur Realisierung besteht in der Verwendung von 2 unabhängigen Ausgängen des Mikroprozessors 4, auf denen ein einfaches Aktivsignal ausgegeben und der Anzeigevorrichtung 5 und der Abschaltvorrichtung 6 auf separaten Leitungen zugeführt wird.

Durch Abtransport von Wolfram zu den Elektrodenenden nimmt die Bogenlänge der Gasentladung in der UHP-Lampe 1 während der Lebensdauer zu und damit die thermische Belastung der Kolbenoberseite durch die Gasentladung verbunden mit der aufwärtsgerichteten Konvektionsströmung. Durch zusätzliche Abschwärzung (Absorption bedeutet zusätzliche Erwärmung) oder/und thermisch belastete Einbaubedingungen, beginnt sich die Kolbenoberseite zu erweichen. Da die Temperatur an der Kolbenoberseite bis in die Nähe des Schmelzpunktes des Quarzes erhöht ist, fließt das Quarz soweit, bis die Zugfestigkeit des erweichenden Quarzes dem sinkenden Innendruck entspricht. Damit verbunden ist ein Spannungsabfall der UHP-Lampe 1, der nicht mehr Standardwerten des normalen Lampenbetriebes entspricht und somit zur Detektion des Aufblasens der UHP-Lampe 1 benutzt werden kann. Zweckmäßigerweise wird die UHP-Lampe 1 dann ausgeschaltet, um eine Explosion auszuschließen. Der Zeitpunkt, wann dieser Effekt auftritt, ist von verschiedenen Parametern der Lampen- und Elektrodenproduktion, der Leistung und der Betriebsweise ebenso abhängig, wie von der Einbausituation der UHP-Lampe 1 in einem optischen System. Deshalb muss jede einzelne UHP-Lampe 1 überwacht werden.

Der Spannungsverlauf der UHP-Lampe 1 über der Zeit ist gekennzeichnet durch eine stetige Zunahme der Spannung, wenn man von den ersten etwa 2000 h absieht. Verantwortlich dafür ist der, je nach Betriebsweise unterschiedlich hohe, jedoch stetige Abtransport von Wolfram von den geschmolzenen Elektrodenspitzen. Dies führt zu einer Vergrößerung des Elektrodenabstandes und damit zu höheren Spannungswerten. Die Steigung der Spannungsverlaufes über der Zeit ist abhängig von der Betriebsweise der Lampe. So zeigen zum Beispiel Messungen an zwei unterschiedlich betriebenen Lampen A und B bis etwa 6000 h einen nahezu konstanten Spannungsverlauf, danach sinkt die Spannung deutlich ab. Dies ist ein Zeichen für einen reduzierten Lampendruck, der durch Aufblasen des Lampenkolbens hervorgerufen wird. Nach 7000 h sind beide Lampen zwar noch unbeschädigt, zeigten jedoch Verformungen von 0.9 mm bzw. 1.0 mm. Dagegen zeigen zwei Lampen C und D bis 4000 h bzw. 5000 h einen stetigen Spannungsanstieg, danach eine deutliche Abnahme der Spannung. Während die Lampe C nach etwa 6600 h explodiert, zeigt die Lampe D nach 7000 h eine Verformung von 0.8 mm. Mit diesem Spannungsabfall sinken auch die für ein optisches System brauchbaren Lichtströme soweit, dass ein Auswechseln der UHP-Lampe 1 aus diesem Grund erforderlich ist, obwohl sie noch funktioniert. Der oben beschriebene Spannungsabfall wird erfindungsgemäß detektiert im Vorschaltgerät 2, welches einen Mikroprozessor 4 beinhaltet, der Zündspannung, Frequenz, Pulshöhe und Leistung steuert und die UHP-Lampe 1 bei niedriger Betriebsspannung auf halbe Leistung zurückschaltet.

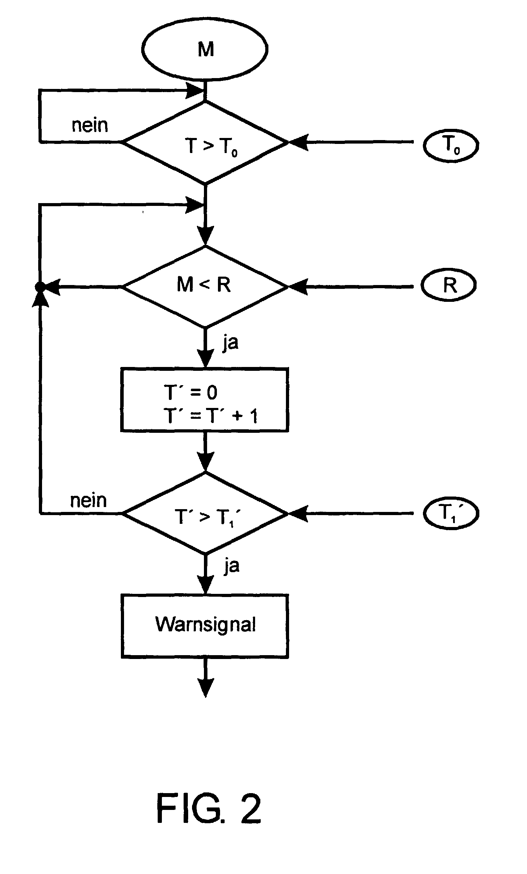

Ein Ausführungsbeispiel eines Verfahrens zur Überwachung gemäß der Erfindung ist in der Figur 2 mittels eines Flussdiagramms dargestellt. Das Spannungsmessgerät 3 liefert einen Messwert M, der vom Mikroprozessor 4 empfangen wird. Im Mikroprozessor 4 kann noch eine einstellbare Zeitschleife vorgesehen sein, die die Auswertung der Messwerte M um eine einstellbare Einbrennphase T₀ verzögert. Nach der Einbrennphase T₀ wird der Messwert M mit einem wählbaren Referenzwert R verglichen, der von einem aus Messungen ermittelten Standardwert für die Lampe 1 abgeleitet und dem Mikroprozessor 4 zugeführt wird. Der Messwert M und der Referenzwert R geben eine der Brennspannung in der UHP-Lampe 1 proportionale Spannung an, die leicht im Vorschaltgerat 2 gemessen werden kann. Um zu vermeiden, dass die Spannungsänderungen in den ersten Stunden während der Einbrennphase T₀ ein vorzeitiges Abschalten bewirken, wird mittels Timer erst nach etwa 2000 h in regelmäßigen Zeitabständen von z. B. 100 h die Spannung gemessen. Wenn ein Messwert M kleiner als der Referenzwert R ist, liegt ein deutliches Absinken der Lampenspannung (Brennspannung der UHP-Lampe 1) vor. Sobald der Vergleich einen kleineren Messwert M als den Referenzwert R ergibt, wird eine Verzögerungszeit T' auf den Wert 0 zurückgesetzt. Die Verzögerungszeit T' wird mit einer einstellbaren Wartezeit T₁' verglichen. Bis zum Erreichen der Wartezeit T₁' wird überprüft, ob der aktuelle Messwert M weiterhin kleiner als der Referenzwert R ist, und die Verzögerungszeit T' jeweils inkrementiert. Wenn die Wartezeit T₁' erreicht ist, d.h., der Messwert M durchgehend während der eingestellten Wartezeit T₁' kleiner als der eingestellte Referenzwert R ist, wird ein Warnsignal erzeugt. Das permanente Unterschreiten des gewählten Referenzwertes R durch den Messwert M über einen gewählten Zeitraum charakterisiert hier ein deutliches Absinken der Spannung der UHP-Lampe 1.

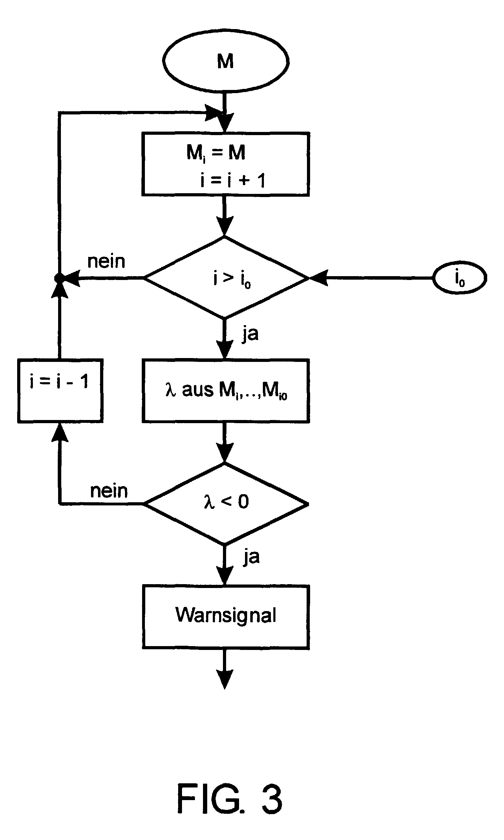

In der Figur 3 veranschaulicht ein Flussdiagramm eine weitere Ausführungsform des erfindungsgemäßen Verfahrens zur Überwachung. Eine Schleife zur Verzögerung der Auswertung der Messwerte M um eine einstellbare Einbrennphase T₀ ist nicht dargestellt, kann jedoch in ähnlicher Weise im Mikroprozessor 4 vorgesehen werden. Es wird eine einstellbare Anzahl i₀ (hier soll i₀=5 sein) von Messwerten M₁ aufgenommen und gespeichert. Wenn 5 Messwerte M₁,..,M₅ vorliegen, wird aus diesen letzten 5 Messwerten M₁,..M₅ die Steigung der Spannung λ berechnet. Solange die Steigung λ positiv ist, wird der jeweils älteste Messwert Mᵢ gelöscht, ein neuer Messwert Mᵢ aufgenommen und daraus erneut die Steigung λ berechnet. Bei Ermittlung einer negativen Steigung λ wird das Warnsignal erzeugt. Durch Berücksichtigung der jeweils letzen 5 Messwerte M₁,..M₅ werden Streuungen der Messwerte Mᵢ oder kurzzeitige Spannungsänderungen, die durch Materialtransporte an den Elektroden auftreten können, unterdrückt. Besonders vorteilhaft ist die Berechnung der Steigung λ der Spannung über der Zeit mittels Regression 1. Ordnung, da bei diesem Verfahren kurzfristige Spannungsänderungen und Streuungen nicht zu vorzeitigem Abschalten führen. Erst wenn die so berechnete Steigung λ negativ wird, liegt ein Indikator für das Aufblasen des Lampenkolbens vor. Dies kann sowohl als Warnung für den Austausch der Lampe 1 angezeigt oder für das Abschalten zwecks Vermeidung von Explosion der Lampe 1 verwendet werden.

## Patentansprüche

1. Verfahren zur Überwachung einer Gasentladungslampe (1), bei dem ein der Lampenspannung zugeordneter elektrischer Messwert (M) erfasst wird,
dadurch gekennzeichnet,
dass bei der Erfassung eines einem deutlichen Absinken der Lampenspannung entsprechenden Messwertes (M) ein Warnsignal erzeugt wird.

2. Verfahren nach Anspruch 1,
dadurch gekennzeichnet,
dass der Messwert (M) mit einem Referenzwert (R) verglichen wird,
dass jeweils zu einem Messwert (M) ein der Abweichung des Messwertes vom Referenzwert (R) entsprechender Differenzwert gebildet wird, und
dass bei Erfassen eines einem einstellbaren maximalen Differenzwert zugeordneten Messwertes (M) ein Warnsignal erzeugt wird.

3. Verfahren nach Anspruch 1,
dadurch gekennzeichnet,
dass bei Erfassen eines einem einstellbaren Minimalwert der Lampenspannung zugeordneten Messwertes (M) das Warnsignal erzeugt wird.

4. Verfahren nach Anspruch 1,
dadurch gekennzeichnet,
dass eine der Lampenspannung zugeordnete Spannung gemessen wird, und dass bei der Messung eines einem deutlichen Absinken der Lampenspannung entsprechenden Grenzwertes für diese Spannung das Warnsignal erzeugt wird.

5. Verfahren nach Anspruch 1,
dadurch gekennzeichnet,
dass ein der Lampenspannung zugeordneter Strom gemessen wird, und dass bei der Messung eines einem deutlichen Absinken der Lampenspannung entsprechenden Grenzwertes für diesen Strom das Warnsignal erzeugt wird.

6. Verfahren nach Anspruch 1,
dadurch gekennzeichnet,
dass ein in einem zum Betrieb der Gasentladungslampe geeigneten Vorschaltgerät (2) enthaltener Mikroprozessor (4) den Messwert (M) empfängt, die Ermittlung des einem deutlichen Absinken der Lampenspannung entsprechenden Messwertes (M) durchführt und das Warnsignal bei Ermittlung eines solchen Messwertes (M) erzeugt.

7. Verfahren nach Anspruch 6,
dadurch gekennzeichnet,
dass der Mikroprozessor (4)
- den Messwert (M) in regelmäßigen zeitlichen Abständen empfangt,
- die während einer einstellbaren Einbrennphase der Gasentladungslampe (1) empfangenen Messwerte (M) nicht zur Ermittlung des einem deutlichen Absinken der Lampenspannung entsprechenden Messwertes (M) heranzieht,
- aus jeweils 5 aufeinanderfolgenden Messwerten (M) die Steigung (λ) des Messwertes (M) ermittelt, und
- bei Ermittlung einer negativen Steigung (λ) des Messwertes (M) das Warnsignal erzeugt.

8. Anordnung zur Überwachung einer Gasentladungslampe (1) mit einer Kontrollschaltung (4) zur Erfassung eines der Lampenspannung zugeordneten elektrischen Messwertes (M),
dadurch gekennzeichnet,
dass die Kontrollschaltung (4) bei der Erfassung eines einem deutlichen Absinken der Lampenspannung entsprechenden Messwertes (M) zur Erzeugung eines Warnsignals vorgesehen ist.

9. Anordnung nach Anspruch 8,
dadurch gekennzeichnet,
dass ein in einem zum Betrieb der Gasentladungslampe (1) geeigneten Vorschaltgerät (2) enthaltener Mikroprozessor (4) zur Bildung der Kontrollschaltung vorgesehen ist.

10. Anordnung nach Anspruch 9,
dadurch gekennzeichnet,
dass der Mikroprozessor (4)
- den Messwert (M) in regelmäßigen zeitlichen Abständen empfängt, - die während einer einstellbaren Einbrennphase der Gasentladungslampe (1) empfangenen Messwerte (M) nicht zur Ermittlung des einem deutlichen Absinken der Lampenspannung entsprechenden Messwertes (M) heranzieht,
- aus jeweils 5 aufeinanderfolgenden Messwerten (M) die Steigung (λ) des Messwertes (M) ermittelt, und
- bei Ermittlung einer negativen Steigung (λ) des Messwertes (M) das Warnsignal erzeugt.
